## Europäisches Patentamt
## European Patent Office
## Office européen des brevets

(19)

(11) Publication number: **0 053 909**

**A1**

(12)

# EUROPEAN PATENT APPLICATION

(21) Application number: **81305686.8**

(22) Date of filing: **02.12.81**

(51) Int. Cl.³: **D 04 H 1/52**
**D 04 H 3/10, D 04 H 13/00**
**D 06 N 3/00, B 32 B 27/12**

(30) Priority: **04.12.80 ZA 806819**

(43) Date of publication of application:
**16.06.82 Bulletin 82/24**

(84) Designated Contracting States:
**AT BE CH DE FR GB IT LI LU NL SE**

(71) Applicant: **JAMES NORTH (AFRICA) (PROPRIETARY) LIMITED**
**91 Escom Road**
**New Germany Natal Province(ZA)**

(72) Inventor: **Tait, Malcolm James**
**5 River Drive**
**Westville Natal Province(ZA)**

(72) Inventor: **Wray, Ronald Edward Malcolm**
**Flat 202 Grand Birches Paradise Valley**
**100 Entabeni Road Pinetown Natal(ZA)**

(74) Representative: **Silverman, Warren et al,**
**HASELTINE LAKE & CO. Hazlitt House 28 Southampton Buildings Chancery Lane**
**London WC2A 1AT(GB)**

(54) **Reinforced flexible plastic sheet materials.**

(57) A method is provided of manufacturing a reinforced flexible plastics sheet material having a web of reinforcing yarn, preferably including weft and warp reinforcing yarns as well as locating stitching therein, and which is at least partly embedded by a coating process in the plastics material. In this method the web of reinforcing yarn is carried on a film of plastics material to which it is secured, conveniently by stitching and the film with the web thereon is subjected to a coating process on either one or both sides thereof. The film of plastics material is chosen such that it chemically bonds with the coating plastics material to result in a substantially homogenous plastics sheet material reinforced with the web of yarn.

EP 0 053 909 A1

- 1 -

"REINFORCED FLEXIBLE PLASTIC
SHEET MATERIALS"

THIS INVENTION relates to reinforced plastic sheet materials of a flexible nature and, more particularly, the invention relates to such materials which are made by subjecting a reinforcing web to a coating operation whether this be effected by means of a dip coating unit; knife-over-rubber-roller process or any other spreading technique in which the reinforcing web of material is coated with an optionally foam type of plastic material which subsequently is allowed to set, gel, or cure, as the case may be.

At the present time such reinforced plastics materials, which are widely used in the protective clothing industry, are made by a variety of different methods which depend, to a large extent, on the nature of the reinforcing web employed. Such webs are usually woven or knitted, stitched, or formed by a combination of both of the latter processes to provide a web which can then be coated on at least one side with the flexible plastics material. In order to achieve coating of such a web it is either attached to a generally pervious paper carrier sheet which then forms part of the finished product, or, alternatively, a lace-like web of reinforcing is located on a release sheet from which the product sheet can be removed after the coated sheet material has been formed and cured at least to a certain extent.

Whilst these processes operate effectively the first one does have the disadvantage that a substantially non-homogeneous product results and the second process has the disadvantage that relatively costly, usually silicone treated, carrier papers have to be employed as release sheets.

It is the object of this invention to provide a process for the manufacture of such reinforced flexible plastic sheet materials in which the use of release sheets is obviated yet a substantially homogenous plastics layer is formed and products of such a process.

It is to be understood that the term "yarn" as used in this specification includes any flexible elongate reinforcing element whether it be multi-strand, twisted or not, monofiliament, natural or synthetic.

In accordance with this invention there is provided a method of manufacturing a reinforced flexible plastics sheet material comprising the formation of a reinforcing layer by attachment of a required web of reinforcing yarn to a film of plastics material compatible with, and permamently chemically attachable to, plastics material to be applied to said web in a coating process to form a reinforced flexible plastic sheet material, applying said plastics material to the reinforcing layer by a coating process, and curing said plastics material to cause the coated material and film to chemically unite.

Further features of the invention provide for the reinforcing web to be formed by a bridge stitch with a warp and weft inlay, preferably a tricot bridge stitch whereby the yarn is attached to the plastic film; for the film to be a polyvinyl chloride (PVC) film; for the plastic material applied by the coating process to be a PVC material selected to bond to, and unite with the film carrying the reinforcing web; and for the coating process to be conducted by a dip coating process: a knife over rubber roller coating process, or, indeed, any other suitable coating process.

It will be understood from the above outline of the invention that the product produced using this process has a substantially homogenous plastic body simply reinforced with the web of stitched yarn together with any warp and weft members which are inlaid. The coating material can be a foamed material, if required, and, in fact, the foamed material could be coated with additional coated layers where this is required. Also, the coating of the reinforcing layer may take place on one or both sides of the layer according to requirements.

It is important to note that the reinforcing yarns are stitched to the plastic film and accordingly the needles whereby this is effected punch holes in the film of material. Such holes can tend to tear and accordingly the plastic material must be chosen so that the punched holes do not tear or become enlarged. The main reason for this is that the initial coating layer, whilst still liquid should not leak through the holes to any appreciable extent as no other carrier sheet is present. It has been found that PVC film is particularly well-suited to the process of this invention although other materials which have not as yet been tested may be equally suitable, if not better. It must be mentioned that certain types of polyethylene film which have been tested do not comply with this requirement adequately.

It will also be understood that numerous different types of yarn could be employed according to this invention and the weft and warp members may be selected according to requirements. The prime importance of the bridge stitching, where this is used to attach the reinforcing yarn to the plastic carrier sheet, is to locate the weft and warp yarn relative to each other so as to allow them to be spaced apart by any suitable distance.

Various embodiments of the invention will now be described with reference to the accompanying drawings in which:-

Fig. 1 illustrates, in very much enlarged isometric view, a small piece of reinforcing layer according to this invention,

Figs. 2, 3 and 4 each illustrate, in enlarged view, a cross-section taken through different forms of reinforced flexible plastics sheet material made according to the invention and embodying a reinforcing layer of the type illustrated in Fig. 1, and,

Fig. 5 is a schematic illustration of the production process of this invention.

- 6 -

As one example of the invention there has been employed a PVC film having a thickness of not less than 12,5 microns and not more than 25 microns, the film being a completely colourless or self-coloured film of the type used in the shrink wrap art.

To this film 1 was stitched at a stitching station 2, by means of a tricot bridge stitch 3, suitable warp and weft reinforcing yarns 4 and 5 respectively to form a reinforcing layer 6. This arrangement of weft and warp inlays in a stitched locating lattice can be conducted all in a single operation on certain machines such as, for example, machines made by the firm Liba Machinenfabrik GmbH of Germany and adapted to effect warp knitting of the locating lattice simultaneously to the location of the weft and warp reinforcing yarns. In this particular instance the tricot locating lattice was a dtex polyamide mulitstrand Z-twist yarn sold under the Trade Name "ENKALON 100" by Enka Glanstoff A.G. of West Germany. The weft and warp yarns were substantially identical but were 280 dtex.

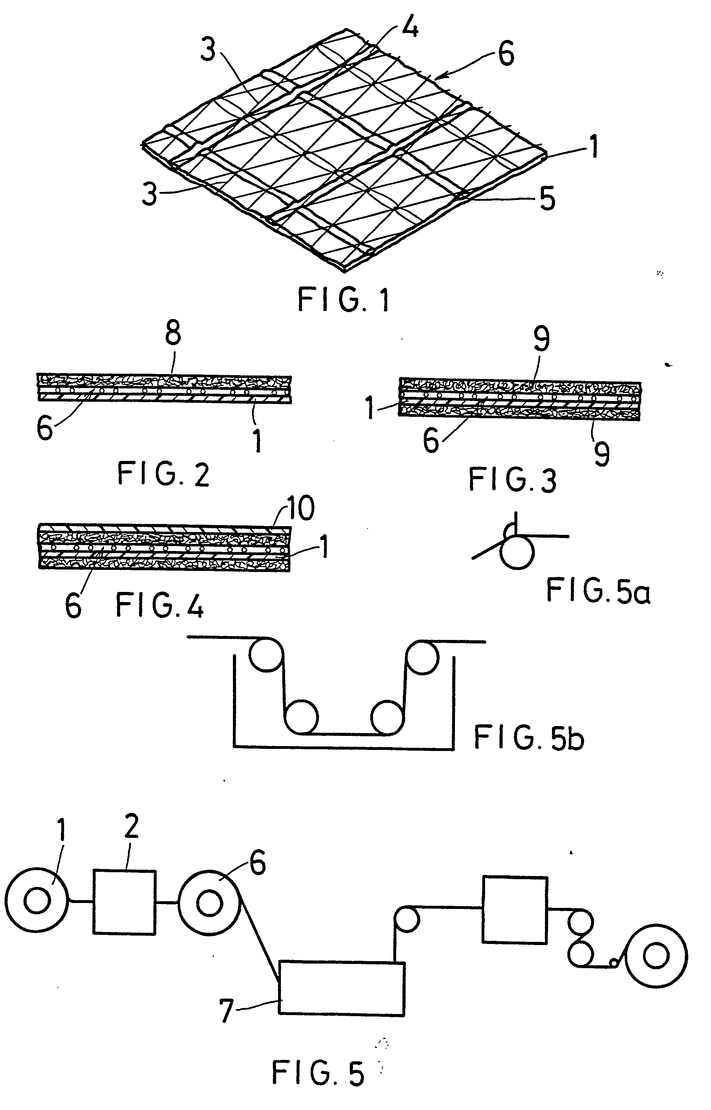

This reinforcing layer or composite material was then subjected to a number of different coating processes, indicated at 7 in Fig. 5, in all of which conventional uncured polyvinyl chloride plastisol was applied to the reinforcing layer. In the case of a single sided coating, application was by means of a knife over rubber roller process of the usual type and as indicated in Fig. 5a, and in the case of a two sided coating by a dip coating process as indicated in Fig. 5b.

In some tests conducted to date a PVC layer 8 was applied to only one side of the reinforcing layer 6 as shown in Fig, 2. In other cases a PVC layer 9 was applied to both sides thereof as shown in Fig. 3. In both instances the cured PVC coating blended chemically together with the PVC carrier sheet to form a substantially homogenous plastic sheet material reinforced simply by means of the reinforcing yarn.

In the coating processes foaming agents may be added to the PVC to obtain, in the one case, a flexible reinforced sheet material having a foamed PVC layer on one side only and in another case one having a foamed PVC layer on both sides of the reinforcing web.

Finally, one such foamed PVC product formed by dip coating had an additional very thin layer 10 of PVC paste applied to the upper surface of a foamed layer by a knife over rubber roller process to provide a most desirable finish which could be provided with any grain or other visual appearance in known manner by embossing.

In all cases it was found that an extremely satisfactory product was obtained without the cost or difficulties mentioned above.

The invention, it is anticipated, will be equally applicable to other plastic materials, plastic film and the like and such additional materials are intended to be included within the scope of this invention.

CLAIMS:

1. A method of manufacturing a reinforced flexible plastics sheet material characterised by the formation of a reinforcing layer by attachment of a required web of reinforcing yarn to a film of plastics material compatible with, and permanently chemically attachable to, plastics material to be applied to said web in a coating process to form a reinforced flexible plastic sheet material, applying said plastics material to the reinforcing layer by a coating process, and curing said plastics material to cause the coated material and film to be chemically united.

2. A method as claimed in claim 1 in which the reinforcing web is formed by a bridge stitch.

3. A method as claimed in either of claims 1 or 2 in which warp or weft threads or both are embodied in the reinforcing layer by means of stitched yarn.

4. A method as claimed in any one of the preceding claims in which the plastics film is a PVC film.

5. A method as claimed in any one of the preceding claims in which the plastics material applied in the coating process is a PVC material.

6. A method as claimed in claim 5 in which the PVC is in the form of a plastisol.

7. A method as claimed in any one of the preceding claims in which coating is effected on one side of the reinforcing layer and is effected by a knife-over-rubber-roller process.

8. A method as claimed in any one of claims 1 to 6 in which coating is effected to both sides of the reinforcing layer.

9. A method as claimed in any one of the preceding claims in which the coating material is a foamed plastics material.

10. A method as claimed in claim 9 in which the foamed plastics material is covered on its exposed face with a further layer of plastics material chemically bonded thereto.

FIG. 1

FIG. 2

FIG.3

FIG.4

FIG.5a

FIG.5b

FIG.5

0053909

## European Patent Office

## EUROPEAN SEARCH REPORT

Application number

EP 81 30 5686

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | <u>NL - A - 68 10667</u> (MALITEX)<br>* Page 1, lines 1-4; page 2, lines 11-17; claims 1-3 * | 1-3 | D 04 H 1/52<br>3/10<br>13/00<br>D 06 N 3/00<br>B 32 B 27/12 |
| X | <u>FR - A - 1 530 418</u> (INDIAN HEAD MILLS)<br>* Page 3, left-hand column, lines 25-26; right-hand column, lines 34-50; abstracts I,II * | 1-3 | |

TECHNICAL FIELDS SEARCHED (Int.Cl. 3)

D 04 H
B 32 B

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 02-03-1982 | MME ELSEN-DROUOT |

EPO Form 1503.1  06.78